# EUROPÄISCHE PATENTANMELDUNG

(11) **EP 2 395 299 A1**
(43) Veröffentlichungstag der Anmeldung: **14.12.2011**
(21) Anmeldenummer: 11075075.9
(22) Anmeldetag: 30.04.2011
(51) Int. Cl.: F24J 2/52

(54) **Tragplatte zur Lagerung von Solarmodulen auf einem Flachsubstrat und Tragplattenfeld**

(30) Priorität: 09.06.2010 DE 102010023562
(71) Anmelder: SOLON SE, 12489 Berlin (DE)
(72) Erfinder: Schwarze, Sascha Oliver, 12277 Berlin (DE)

(57) **Zusammenfassung**

Bekannte rechteckige Tragplatten mit einer Vielzahl von Trapezprofilen dienen der neigungslosen Lagerung von mehreren Solarmodulen und tragen quer verlaufende Sicherungselemente. Weiterhin sind die Tragplatten auf quer verlaufenden Ständern auf einem Flachsubstrat aufgelegt. Die erfindungsgemäße Tragplatte (01) hat ungefähr die Größe eines einzelnen zu lagernden Solarmoduls (41). Die Oberseiten (10) der Trapezprofile (04, 05, 06) sind als direkte Auflagefläche (11) und die Zwischenräume (12) zwischen den Trapezprofilen (04, 05, 06) als direkte Standfläche (13) ausgebildet. Dabei ist die Standfläche (13) zwei- bis dreimal so groß wie die Auflagefläche (11) und dient gleichzeitig als Aufnahmebereich (39) für ein festes Beschwerungsgut (33). Weiterhin nimmt die Höhe (h) der Trapezprofile (04, 05, 06) von der Vorderkante (07) zur Hinterkante (08) kontinuierlich zu, sodass die Auflagefläche (11) geneigt ist. Die Tragplatte (01) kann aus Kunststoff tief gezogen werden und ist leicht handhabbar. In der Lagerung ist sie stapelbar. Es kann ein eindringungsfreies Tragplattenfeld (32) aus miteinander fest, aber lösbar verbundenen Tragplatten (01) zum Tragen von rahmenlosen Solarpaneelen (37) gebildet werden, das gegen angreifende Windlasten einfach durch ein festes Beschwerungsgut (33) gesichert ist.

## Beschreibung

Die Erfindung bezieht sich auf eine Tragplatte, die der Lagerung von Solarmodulen auf einem Flachsubstrat dient, mit zumindest drei gleichmäßig zueinander beabstandeten parallelen Trapezprofilen, die jeweils durchgängig entlang der beiden Seitenkanten und plattenmittig von der Vorderkante der Tragplatte zur Hinterkante verlaufen, wobei alle vier Kanten eine Rechteckfläche einschließen, und auf ein Tragplattenfeld mit zumindest zwei benachbart angeordneten Tragplatten.

Durch die zunehmende Verbreitung von stromerzeugenden Photovoltaiksystemen werden auch verstärkt Flachsubstrate, beispielsweise in Form von Flachdächern mit einer Neigung in einem Bereich von bis zu 5°, belegt. Dabei spielt insbesondere das Gewicht des aufgebrachten Photovoltaiksystems eine entscheidende Rolle, da Flachdächer nicht beliebig belastbar sind. Wesentlicher Bestandteil eines Photovoltaiksystems ist die Lagerung, die einen Großteil des Gesamtgewichts umfasst. Um hier Gewicht einzusparen, werden zunehmend kompakte Tragkonstruktionen in Leichtbauausführung zur Lagerung von Solarmodulen eingesetzt.

### STAND DER TECHNIK

Aus der DE 33 46077 C2 ist ein Formstein bekannt, der auf einer Grundplatte zwei dreieckige Seitenwände mit rechteckigem Querschnitt aufweist, sodass ein Solarmodul in geneigter Position montiert werden kann. Nach vorne und hinten ist der Formstein offen. Es können mehrere Formsteine in Reihe positioniert werden, ohne dabei miteinander verbunden zu werden. Zur durchdringungsfreien Aufstellung auf einem Flachdach besteht der Formstein aus einem schweren Material (Beton).

Aus der DE 698 15 168 T2 ist beispielsweise eine Tragwanne aus Kunststoff bekannt, deren hintere Wandung höher ist als die vordere Wandung. Es ergibt sich ein geneigt verlaufender umlaufender Rand, auf den ein Solarmodul montiert werden kann. Die Tragwanne kann mit weiteren Tragwannen zu einer Reihe kombiniert werden. Zur durchdringungsfreien Aufstellung auf einem Flachdach kann die Tragwanne mit Betonelementen beschwert werden. Aus der DE 10 2005 033 545 A1 ist eine ähnliche Tragwanne bekannt, die geschlossen und mit einem flüssigen Beschwerungsgut füllbar ist.

Aus der US 2009/0320907 A1 ist es bekannt, den Rahmen eines Solarmoduls auf einer Seite mit rechtwinkligen Tragarmen zu unterstützen, um eine Neigung des Solarmoduls zu erreichen. Diese Tragarme weisen Verbindungsmittel auf, um mit den Rahmen weiterer Solarmodule in Reihen und in Spalten verbunden zu werden, sodass sich ein Solarmodulfeld ergibt. Die einzelnen Solarmodule mit Rahmen und Tragarmen sind zur Lagerung übereinander stapelbar. Weiterhin können Windabweiser zwischen den Tragarmen vorgesehen sein. In der korrespondierenden US 2009/0320904 A1 wird außerdem eine Beschwerungswanne zwischen den Tragarmen beschrieben.

Aus der DE 203 18 915 U1 ist eine Tragplatte mit vier Eckpfosten aus Beton bekannt, auf der nach der Art eines umgedrehten Tisches ein Solarmodul gelagert werden kann. Dabei sind alle Pfosten gleichlang, sodass sich keine geneigte Lagerung ergibt. Aus der EP 2 040 014 A2 ist eine zu Lagerzwecken stapelbare Tragplatte bekannt, die zumindest zwei Auflagevorsprünge auf einer Bodenplatte aufweist, wobei der hintere Vorsprung höher ist als der vordere Vorsprung, sodass sich für ein montiertes Solarmodul eine Neigung ergibt. Zwischen den Auflagenvorsprüngen befinden sich offene Mulden. Zur durchdringungsfreien Montage auf einem Flachdach kann die Tragplatte vor und hinter den Vorsprüngen mit Steinen beschwert werden. Dabei können mehrere Tragplatten nebeneinander in einer Reihe angeordnet sein, die mit ihren Seitenkanten auf ein Verbindungselement aufgesteckt werden. Weiterhin kann zwischen den Vorsprüngen ein Windabweiser vorgesehen sein.

Aus der DE 20 2004 019 681 U1 ist es weiterhin bekannt, Solarmodule in Reihen und Spalten direkt auf die Trapezprofile eines Flachdachs zu nieten. Der der Erfindung nächstliegende Stand der Technik wird jedoch in der DE 10 2007 040 735 A1 beschrieben. Es wird eine rechteckige Tragplatte zur Lagerung von mehreren Solarmodulen auf einem Flachsubstrat offenbart, die aus drei gleichmäßig zueinander beabstandeten Trapezprofilen besteht, die durchgängig entlang der beiden Seitenkanten und in der Plattenmitte von der Vorderkante der Tragplatte zur Hinterkante verlaufen. Dabei sind alle drei Trapezprofile von konstant gleicher Höhe und eng zueinander benachbart, wie es von einer kommerziell als vorkonfektionierte Massenware erhältlichen Trapezprofilplatten her bekannt ist. Diese kann bis zu 3 m breit und 10 m lang sein, sodass jede Trapezprofilplatte für die Lagerung von mehreren Solarmodulen in Reihen und Spalten eingesetzt wird. Die Oberseiten der Trapezprofile nehmen fast die gesamte Rechteckfläche der Trapezprofilplatte ein und tragen Sicherungselemente, die die Auflagefläche für die Solarmodule bilden. Die Zwischenräume zwischen den Trapezprofilen sind aufgrund der engen Benachbarung sehr schmal und dienen der Lagerung auf quer verlaufenden Aufständerungselementen gleicher Höhe, die durchdringungsfrei auf dem Flachsubstrat aufliegen. Eine geneigte Lagerung der Solarmodule ergibt sich nur durch eine Neigung des Flachsubstrats. Zusammen mit den Aufständerungselementen und den Sicherungselementen bilden die Trapezprofile eine leichtgewichtige Gitterstruktur, zu deren Sicherung ein umlaufender Rahmen mit Niederhaltern vorgesehen ist.

### AUFGABENSTELLUNG

Die **AUFGABE** für die vorliegende Erfindung ist ausgehend von dem zuvor erläuterten nächstliegenden Stand der Technik darin zu sehen, eine gattungsgemäße Tragplatte anzugeben, die unter Beibehaltung ihrer Leichtbaueigenschaften besonders einfach handhabbar ist und keine zusätzlichen Aufständerungs- oder Sicherungselemente für die Solarmodule benötigt. Weiterhin soll die erfindungsgemäße Tragplatte eine geneigte Lagerung der Solarmodule auch auf einem horizontalen Flachsubstrat ermöglichen. Alle Anforderungen sollen auch für ein Feld aus mehreren Tragplatten gelten. Die erfindungsgemäße **LÖSUNG** ist dem Hauptanspruch zu entnehmen. Vorteilhafte Weiterbildungen der erfindungsgemäßen Tragplatte sind den Unteransprüchen zu entnehmen. Die Nebenansprüche zeigen vorteilhafte Kombinationen der erfindungsgemäßen Tragplatte in einem Tragplattenfeld. Alle Ansprüche werden im Folgenden im Zusammenhang mit der Erfindung allgemein näher erläutert.

Die erfindungsgemäße Tragplatte ist gegenüber der nächstliegenden bekannten Tragplatte grundsätzlich dadurch gekennzeichnet, dass sie eine Abmessung der Rechteckfläche im Größenbereich der Rechteckfläche eines einzelnen zu lagernden rechteckigen flächigen Solarmoduls aufweist. Damit wird die Tragplatte besonders leicht handhabbar. Weiterhin ist es für die erfindungsgemäße Tragplatte charakteristisch, dass die Oberseiten der Trapezprofile als direkte Auflagefläche für das zu lagernde Solarmodul auf der Tragplatte und die Zwischenräume zwischen den Trapezprofilen als direkte Standfläche für die Tragplatte auf dem Flachsubstrat ausgebildet sind. Weitere Ebenen zur Aufständerung der Tragplatte auf dem Substrat und zur Montage der Solarmodule auf der Tragplatte mithilfe von Sicherungselementen, wie sie bei der bekannten Tragplatte erforderlich sind, entfallen bei der erfindungsgemäßen Tragplatte völlig. Weiterhin verfügt die erfindungsgemäße Tragplatte über eine Standfläche, die zwei- bis dreimal so groß ist wie die Auflagefläche und gleichzeitig als Aufnahmebereich für ein festes Beschwerungsgut dient. Hier zeigt die bekannte Tragplatte nur ganz schmale Stege zwischen den Trapezprofilen, die nicht beschwert werden können und auch nicht als sichere Standfläche dienen können. Schließlich ist die erfindungsgemäße Tragplatte dadurch gekennzeichnet, dass die Höhe der Trapezprofile von der Vorderkante zur Hinterkante kontinuierlich zunimmt. Durch diese Maßnahme wird eine einfache, aber wirkungsvolle Neigung der Auflagefläche für das Solarmodul erzeugt, sodass dieses im Betrieb optimal dem einfallenden Sonnenlicht entgegen gerichtet werden kann.

Durch die ansteigende Höhe der Trapezprofile ergeben sich unterschiedliche Ausbildungen der Oberflächen in der Auflagefläche und der Zwischenräume in der Standfläche. Sind die Oberflächen und Zwischenräume ebenfalls rechteckig, so zeigen die seitlichen Wandungen der Trapezprofile einen gebogenen Verlauf. Vorteilhafter sind jedoch eben verlaufende Seitenflächen. Deshalb können vorteilhaft bei der Erfindung eine Auflagefläche aus rechteckigen Oberseiten und eine Standfläche aus trapezförmigen Zwischenräumen zum Einsatz kommen. Alternativ ist auch eine Ausgestaltung der Auflagefläche aus trapezförmigen Oberseiten und der Standfläche aus rechteckigen Zwischenräumen vorteilhaft möglich. Derartige Ausbildungen sind durch Tiefzieh- oder Kantverfahren besonders leicht herstellbar. Besonders vorteilhaft ist es auch, wenn die Tragplatte nach der Erfindung stapelbar ist. Dazu weisen die Seitenflächen aller vorhandenen Trapezprofile bevorzugt einen schrägen Verlauf auf. Nach dem Vorbild der vorkonfektionierten einfachen Trapezprofilplatten können die Tragplatten nach der Erfindung dann einfach übereinander gestapelt und gelagert werden. Eine Ausbildung aus einem leichten und witterungsfesten Kunststoff bietet sich dabei besonders an. Eine noch verbesserte Handhabbarkeit der einzelnen Tragplatten ergibt sich, wenn Griffaussparungen in den äußeren Seitenflächen der beiden äußeren Trapezprofile entlang der beiden Seitenkanten der Tragplatte vorgesehen sind. Bei der Auslegung der einzelnen Tragplatten entstehen durch die schrägen Seitenflächen auch der äußeren Trapezprofile jedoch Abstände im Bereich der Auflagefläche, die jedoch auch einfach überbrückt werden können. Günstiger ist es jedoch, wenn bevorzugt die äußeren Seitenflächen der beiden äußeren Trapezprofile entlang der beiden Seitenkanten der Tragplatte senkrecht verlaufen. Dadurch ist zwar die Stapelbarkeit etwas ungünstiger, die Oberseiten der äußeren Trapezprofile benachbarter Tragplatten bilden jedoch eine aneinander anschließende Auflägefläche. Die Solarmodule, die mit ihren Seitenkanten mit den Tragplatten abschließen, können dadurch nahezu spaltfrei in Spalten nebeneinander ausgelegt werden, was eine optimale Ausnutzung der Substratfläche ermöglicht.

An der Hinterkante sind die Trapezprofile aufgrund der erfindungsgemäßen kontinuierlichen Zunahme höher als an der Vorderkante der Tragplatte. Die sich großen hinteren Kopfflächen der Trapezprofile können dabei orthogonal zur Standfläche der Tragplatte ausgebildet sein. Es ergeben sich jedoch dadurch ggfs. ungünstige Windangriffsflächen. Außerdem können die Solarmodule in hintereinander liegenden Reihen so dicht aneinander gelagert werden, dass sie sich ggfs. gegenseitig beschatten. Bevorzugt ist die Tragplatte nach der Erfindung daher gekennzeichnet durch eine zur Tragplatte hin geneigte schräge Ausbildung der Kopfflächen der Trapezprofile an der Hinterkante der Tragplatte. Diese geneigten Flächen bieten dem Wind geringere Angriffsflächen und vergrößern den Abstand zwischen den einzelnen Solarmodulreihen, sodass diese sich nicht gegenseitig beschatten können. Die Kopfflächen liegen im Bereich der Trapezprofile. Vorteilhaft können auch die die Standfläche bildenden Zwischenräume eine Abschlusswandung mit einer Höhe der Trapezprofile entlang der Hinterkante der Tragplatte zumindest im Bereich der Trapezprofile aufweisen. Es ergibt sich ein abgeschlossener Raum, der gut mit einem Beschwerungsgut gefüllt werden kann. Analog zu den Kopfflächen der Trapezprofile kann bevorzugt auch die Abschlusswandung schräg ausgebildet sein. Zur guten Durchlüftung der Tragplatten zur Wärmeabfuhr und verbesserten Bodenhaftung können vorteilhaft Belüftungsöffnungen in der Abschlusswandung vorgesehen sein. Damit auf dem Flachsubstrat anstehendes Wasser gut im Bereich der Tragplatten abfließt, kann vorteilhaft ein Abflussgitter entlang der Hinterkante der Tragplatte zumindest im Bereich der Standfläche zwischen den Trapezprofilen vorgesehen sein. Besonders vorteihaft ist jedoch bei der Tragplatte nach der Erfindung eine durchgängige Abschlusswandung mit einem durchgängigen Abflussgitter, da eine derartige Kombination besonders einfach herstellbar ist. Die hinteren Kopfflächen der Trapezprofile sind dabei einfach in die Abschlusswandung integriert. Vorteilhaft ist jedoch in der Abschlusswandung im Bereich der Kopffläche eines äußeren Trapezprofils eine Öffnung vorgesehen. Unter diesem seitlichen Trapezprofil kann beispielsweise die Anschlussdose des Solarmoduls angeordnet sein, die durch die Öffnung leicht erreichbar ist - auch für die Anschlusskabel.

Die Oberseiten der Trapezprofile bilden gemeinsam die direkte Auflagefläche für das Solarmodul. Eine Befestigung kann beispielsweise durch eine einfache Verklebung erfolgen. Vorteilhaft ist es dabei, wenn eine Längsprofilierung in den Oberseiten der Trapezprofile vorgesehen ist. Ohne die eigentliche Tragfläche zu verringern, wird durch die verringerte Auflagefläche eine verbesserte Demontage durch Ablösen der Klebung des Solarmoduls ermöglicht. An der Hinterkante der Tragplatten kann, wie bereits ausgeführt, bevorzugt eine schräge Abschlusswandung vorgesehen sein, die für einen vergrößerten Abstand der einzelnen Reihen der Solarmodule sorgt. Ein optimaler Abstand zwischen den einzelnen Solarmodulreihen ergibt sich jedoch, wenn zusätzlich noch ein durchgängiger Trittsteg entlang der Vorderseite der Tragplatte vorgesehen ist. Durch diese Ausgestaltung wird außerdem noch eine optimale Erreichbarkeit der Solarmodule ermöglicht. Monteure können zwischen den einzelnen Reihen gehen und müssen sich nicht auf den Solarmodulen selbst bewegen, wie es aus dem Stand der Technik oft bekannt ist. Bevorzugt kann der Trittsteg gitterförmig ausgebildet sein, sodass er trotz guter Trittstabilität abfließendes Wasser leicht hindurch lässt und nicht viel Gewicht umfasst, was insbesondere dann von Vorteil ist, wenn der Trittsteg einstückig mit der Tragplatte ausgebildet ist. Auch die Abschlusswandung kann problemlos in die Einstückigkeit miteinbezogen werden.

Die Tragplatte nach der Erfindung kann in mehreren Reihen hintereinander verlegt werden. dabei können die Tragplatten einfach aneinander geschoben werden, sodass sie jederzeit auch einzeln entfern- oder verschiebbar sind. Für die Gesamtstabilität des Solarmodulfeldes - auch gegenüber angreifenden Windlasten - ist es jedoch auch vorteilhaft, wenn Verbindungslaschen an der Hinterkante der Tragplatte und Verbindungsbolzen an der Vorderkante der Tragplatte oder des Trittstegs vorgesehen sind, sodass mehrere Tragplatten hintereinander in Spalten verbindbar sind. Die Verbindungslaschen können winklige Schlitze aufweisen, in die die Verbindungsbolzen einrastbar sind. Bevorzugt können dabei zwei Verbindungslaschen jeweils in Verlängerung der äußeren Seitenfläche der beiden äußeren Trapezprofile vorgesehen sein. Die zugehörigen beiden Verbindungsbolzen sind dann jeweils an den äußeren Seitenflächen der beiden äußeren Trapezprofile angeordnet. Sie können auch in die Seitenwandungen des Trittstegs integriert sein. Zur Verbindung der Tragplatten in den Reihen können weiterhin bevorzugt weitere Verbindungselemente im Bereich der äußeren Seitenflächen der beiden äußeren Trapezprofile vorgesehen sein. Dabei können die weiteren Verbindungselemente bevorzugt in Form einer Schiene mit einer Schwalbenschwanzführung ausgebildet sein. Weiterhin können ein vorderes weiteres Verbindungselement im Bereich der Vorderkante der Tragplatte oder des Trittstegs und ein hinteres weiteres Verbindungselement im Bereich der Hinterkante der Tragplatte vorgesehen sein.

Mehrfach wurde bereits ausgeführt, dass mit der Tragplatte nach der Erfindung zur Lagerung eines Solarmoduls vorteilhaft auch ein ganzes Tragplattenfeld aus einer Vielzahl von in Reihen und Spalten benachbart angeordneten Tragplatten zur Lagerung einer entsprechenden Anzahl von Solarmodulen gebildet werden kann. Um eine gute Sicherung dieses Tragplattenfeldes gegen angreifende Windlasten zu erreichen, können bevorzugt die Standflächen der Tragplatten mit grobkörnigem Kies als aufgebrachtes Beschwerungsgut beschwert werden. Andere feste Beschwerungsgüter, auch in Form von großen regelmäßigen Steinen, können natürlich ebenfalls problemlos eingebracht werden. Die Tragplatten nach der Erfindung weisen schräge Trapezprofile auf, auf denen die Solarmodule geneigt gelagert werden können. Vorteilhaft können deshalb alle Tragplatten im Tragplattenfeld eine Ausrichtung der geneigten Auflageflächen der Tragplatten gegen im Betrieb einfallendes Sonnenlicht aufweisen. Ebenfalls wurde bereits ausgeführt, dass die einzelnen Tragplatten vorteilhaft auf unterschiedliche Weise in den einzelnen reihen und Spalten miteinander verbunden werden können. Handelt es sich bei der Verbindung der Tragplatten in den Reihen um Schienen mit Schwalbenschwanzführung, können vorteilhaft Schiebeelemente mit einem beidseitigen Schwalbenschwanzprofil, die in die Schwalbenschwanzprofile der Schienen mit Schwalbenschwanzführung zwischen benachbarten Tragplatten eingeschoben sind, verwendet werden. Auch wurde bereits ausgeführt, dass das Solarmodul bevorzugt einfach auf die Auflagefläche der Tragplatte aufgeklebt werden kann. Besonders vorteilhaft können deshalb bei einem Tragplattenfeld rahmenlose Solarpaneelen als Solarmodule auf die Auflageflächen der Tragplatten mittels Klebung aufgebracht werden. Es ergibt sich aus den leichten Tragplatten in Verbindung mit den leichten Solarpaneelen eine besonders leichte Konstruktion, die auch auf geringer tragenden Flachsubstraten anordenbar ist. Ein Abheben aufgrund von Windlasten kann durch eine entsprechende Beschwerung mit einem Beschwerungsgut einfach vermieden werden, sodass bevorzugt eine eindringungsfreie Auflage der Tragplatten auf das Flachsubstrat möglich ist. Gerade bei Flachsubstraten ist die Unverletztheit der Dachhaut zur Absicherung der Wasserdichtheit von besonderer Bedeutung. Im Einzelfall - bei besonders großen angreifen Windlasten - kann aber auch eine Abspannung des Tragplattenfeldes, beispielsweise über diagonale Abspannseile an zumindest zwei Punkten, erfolgen.

Die genannten Modifikationen der erfindungsgemäßen Tragplatte können sowohl alleine als auch in beliebigen Kombinationen miteinander zum Einsatz bei der Erfindung gelangen. Weitere Modifikationen sind ohne weiteres ebenfalls möglich. Weiter beispielhafte konstruktive Ausführungen sind dem nachfolgenden speziellen Beschreibungsteil zu entnehmen

### AUSFÜHRUNGSBEISPIEL

Bevorzugte Ausbildungsformen der Tragplatte zur Lagerung von Solarmodulen auf einem Flachsubstrat nach der Erfindung werden nachfolgend anhand der schematischen Figuren näher erläutert. Dabei zeigt die
- **FIGUR 1**: eine perspektivische Ansicht der Tragplatte,
- **FIGUREN 2A,B,C**: verschiedene Ausführungsformen der Trapezprofile,
- **FIGUR 3**: eine Frontalansicht der Tragplatte gem. **FIG. 1**von oben,
- **FIGUR 4**: eine Frontalansicht der Tragplatte gem. **FIG. 1**von hinten,
- **FIGUR 5**: eine Frontalansicht der Tragplatte gem. **FIG. 1** von vorne,
- **FIGUR 6A**: eine Frontalansicht der Tragplatte gem. **FIG. 1** von rechts,
- **FIGUR 6B**: eine Frontalansicht der Tragplatte gem. **FIG. 1** von links und
- **FIGUR 7**: ein Tragplattenfeld aus mehreren Tragplatten gem. **FIG. 1****.**

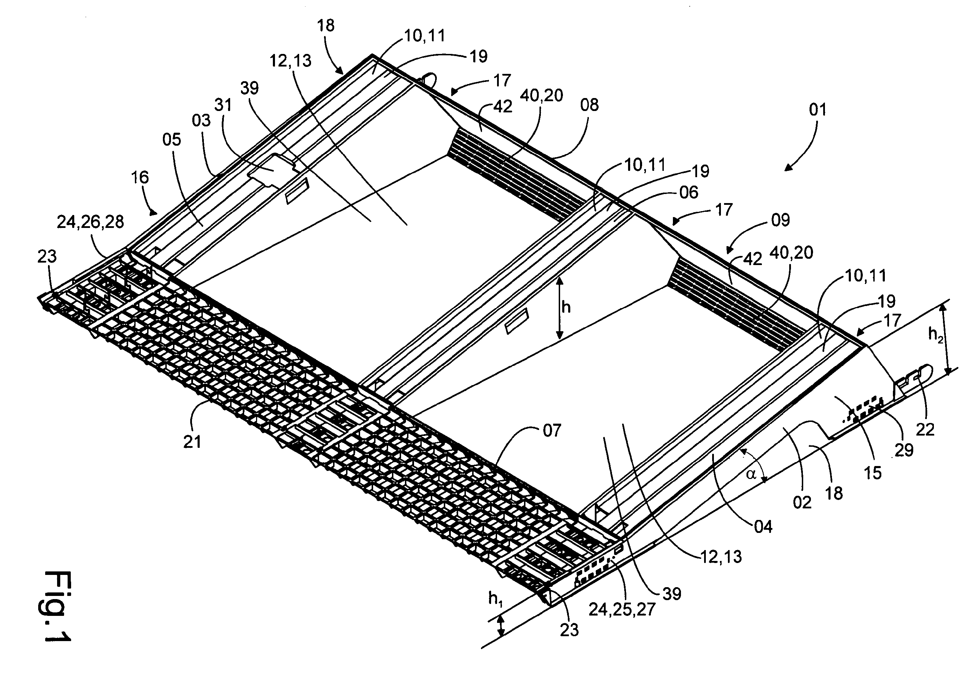

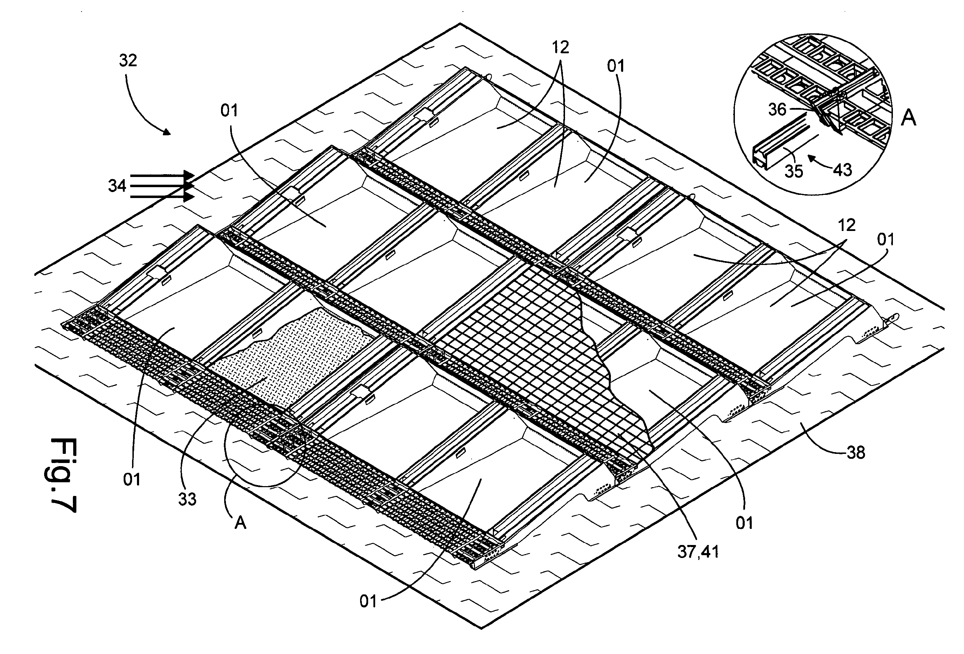

In der **FIGUR 1** ist eine rechteckige Tragplatte **01** nach der Erfindung zur Lagerung von Solarmodulen auf einem Flachsubstrat in der perspektivischen Draufsicht dargestellt. Die Tragplatte **01** wird an ihren beiden Seitenkanten **02, 03** von zwei äußeren Trapezprofilen **04, 05** begrenzt. In der Mitte der Tragplatte **01** verläuft ein mittleres Trapezprofil **06.** Alle Trapezprofile **04, 05, 06** verlaufen parallel zueinander und durchgängig von der Vorderkante **07** der Tragplatte **01** zu der Hinterkante **08,** wobei alle vier Kanten **02, 03, 07, 08** eine Rechteckfläche **09** einschließen. Dabei ist diese Rechteckfläche **09** in etwa so groß wie ein einzelnes zu lagerndes flächiges Solarmodul (vergleiche **FIGUR 7**). In dem Ausführungsbeispiel sind drei Trapezprofile **04, 05, 06** dargestellt. Diese sind gleichmäßig auf der Tragplatte **01** verteilt. Somit ergibt sich die Anzahl der erforderlichen Trapezprofile **04, 05, 06** in Abhängigkeit von der Größe des zu lagernden Solarmoduls und damit von der Größe der Rechteckfläche **09.** Immer vorhanden sind die beiden äußeren Trapezprofile **04, 05.** Dazwischen können je nach Größe der Rechteckfläche **09** nur ein Trapezprofil (mittleres Trapezprofil **06**) oder auch mehrere Trapezprofile angeordnet sein. Beispielsweise kann zwischen dem mittleren Trapezprofil **06** und den beiden äußeren Trapezprofilen **04, 05** jeweils noch ein weiteres Trapezprofil vorgesehen sein, sodass sich insgesamt fünf Trapezprofile auf der Tragplatte **01** befinden. Andere Anzahlen sind ebenfalls realisierbar, wobei jedoch in Abhängigkeit von der Größe der Rechteckfläche **09** die Flächenverhältnisse zu beachten sind (siehe unten).

Alle Oberseiten **10** der Trapezprofile **04, 05, 06** bilden eine direkte Auflagefläche **11** für das zu lagernde Solarmodul auf der Tragplatte **01.** Alle Zwischenräume **12** zwischen den Trapezprofilen **04, 05, 06** bilden eine direkte Standfläche **13** für die Tragplatte **01** auf dem Flachsubstrat, beispielsweise einem bis 5° geneigten Flachdach. Dabei ist jedoch die Standfläche **13** zwei- bis dreimal so groß ist wie die Auflagefläche **11.** Gleichzeitig dient die Standfläche **13** noch als Aufnahmebereich **39** für ein festes Beschwerungsgut. Alle Trapezprofile **04, 05, 06** zeigen eine kontinuierliche Zunahme ihrer Höhe **h** in ihrem Verlauf von der Vorderkante **07** zur Hinterkante **08** der Tragplatte **(h₁ → h₂),** sodass sich eine Neigung der Auflagefläche unter einem Neigungswinkel α ergibt.

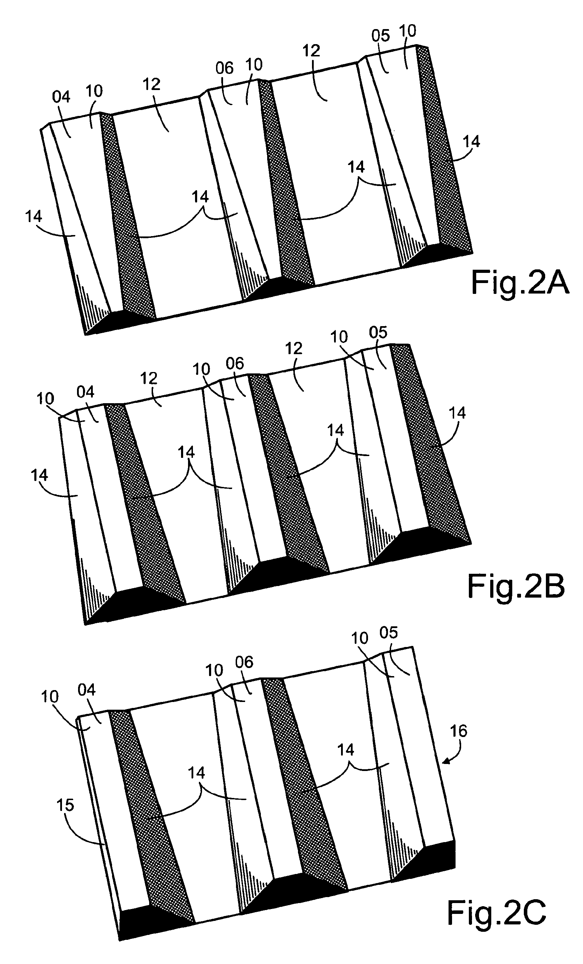

Die **FIGUREN 2A** und **2B** zeigen mögliche Formen der Oberseiten **10** der Trapezprofile **04, 05, 06** und der Zwischenräume **12** im Detail. In der **FIGUR 2A** haben die Oberseiten **10** eine trapezförmige Form und die Zwischenräume **12** eine rechteckige Form. In der **FIGUR 2B** ist es umgekehrt: die Oberseiten **10** haben eine rechteckige Form und die Zwischenräume **12** eine trapezförmige Form. In beiden Fällen ergibt sich für die Seitenflächen **14** der Trapezprofile **06** eine trapezförmige, aber ebene Form. Diese Ausgestaltungen sind besonders gut für eine Stapelbarkeit der Tragplatte **01** bei der Vorratslagerung geeignet. Dabei kann die Tragplatte **01** bevorzugt aus einem Kunststoff hergestellt werden. Für den nicht dargestellten Fall einer rechteckigen Form von Oberseiten **10** und Zwischenräume **12** haben die Seitenflächen **14** einen gebogenen trapezförmigen Verlauf. In der **FIGUR 2C** ist noch ein äußeres Trapezprofil **05** dargestellt, bei dem die äußere Seitenfläche **15** senkrecht ausgebildet ist, sodass benachbarte Tragplatten **01** mit ihren äußeren Trapezprofilen **04** spaltlos anschließen können. Die Ausbildung von senkrechten Seitenflächen **15, 16** ist auch bei der Tragplatte **01** gemäß **FIGUR 1** entlang der Seitenkanten **02** und **03** umgesetzt.

Weiterhin ist in der **FIGUR 1** eine zur Tragplatte **01** hin geneigte schräge Ausbildung von Kopfflächen **17** der Trapezprofile **04, 05, 06** an der Hinterkante **08** der Tragplatte **01** dargestellt. Im Bereich der Zwischenräume **12** ist eine Abschlusswandung **42** mit der Höhe **h₂** der Trapezprofile **04, 05, 06** angeordnet, die dieselbe Neigung aufweist wie die Kopfflächen **17** der Trapezprofile **04, 05, 06.** In der äußeren Seitenfläche **16** des äußeren Trapezprofils **05** ist weiterhin eine Griffaussparung **18** dargestellt, die das Auflegen der Tragplatte **01** auf das Flachsubstrat erleichtert. Die äußere Seitenfläche **15** der äußeren Trapezprofils **04** weist ebenfalls eine solche Griffaussparung **18** auf. Weiterhin sind Längsprofilierungen **19** in den Oberseiten **10** der Trapezprofile **04, 05, 06** dargestellt, die eine Aufklebung der Solarmodule erleichtern. Zu erkennen ist ebenfalls ein Abflussgitter **40** entlang der Hinterkante **08** der Tragplatte **01** im Bereich der Standfläche **13** zwischen den Trapezprofilen **04, 05, 06.** Das Abflussgitter **40** dient dem Durchfluss von Wasser auf dem Flachsubstrat. Weiterhin weist die Abschlusswandung **42** Belüftungsöffnungen **20** auf, die der Wärmeabfuhr unterhalb der Tragplatten **01** durch Luftzirkulation und der Verringerung der Windangriffsflächen dienen. Das Abflussgitter **40** kann ebenfalls der Be- und Entlüftung als Belüftungsöffnung **20** dienen. Schließlich ist an der Vorderkante **07** der Tragplatte **01** ein gitterförmiger Trittsteg **21** dargestellt, auf dem Monteure zwischen den einzelnen Solarmodulreihen laufen können.

Weiterhin zeigt die **FIGUR 1** Verbindungslaschen **22** an der Hinterkante **08** der Tragplatte **01,** die in Verlängerung der äußeren Seitenflächen **14, 15** der beiden äußeren Trapezprofile **04, 05** angeordnet sind. Außerdem befinden sich Verbindungsbolzen **23** an der Vorderkante **24** des Trittstegs **21,** die in Seitenwandungen **25, 26** von Verlängerungen **27, 28** der beiden äußeren Trapezprofile **04, 05** integriert sind. Durch Eingreifen der Verbindungsbolzen **23** in die Verbindungslaschen **22** können die Tragplatten **01** spaltenweise hintereinander fest, aber lösbar verbunden werden. Zu erkennen sind ebenfalls Öffnungen **29** in den äußeren Seitenflächen **14, 15** der äußeren Trapezprofile **04, 05.** Diese dienen der Aufnahme weiterer (nicht dargestellter) Verbindungselemente zur reihenweisen Verbindung der Tragplatten **01** nebeneinander. Beispielsweise kann es sich um ein- oder mehrstückige Schienen mit Schwalbenschwanzführungen handeln, die durch ein gemeinsames Schiebeelement miteinander verbunden werden (vergleiche auch **FIGUR 7** und DE 10 2006 044 418 B3 oder DE 10 2010 014 414.2**,** zum Anmeldezeitpunkt noch nicht veröffentlicht).

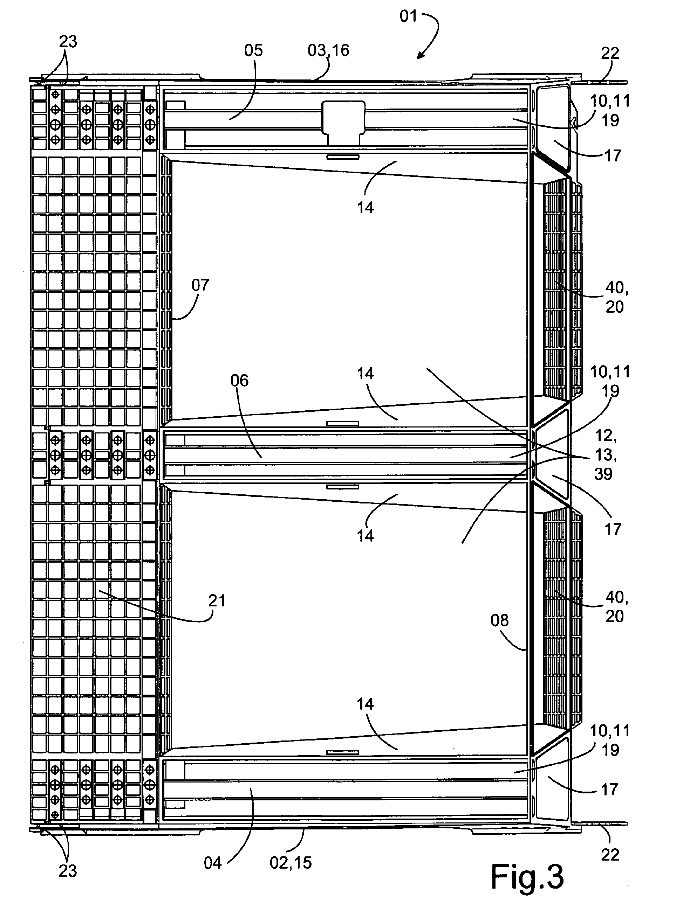

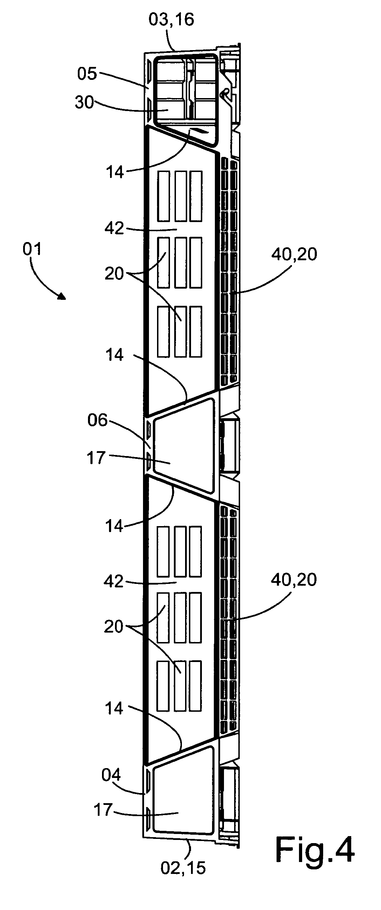

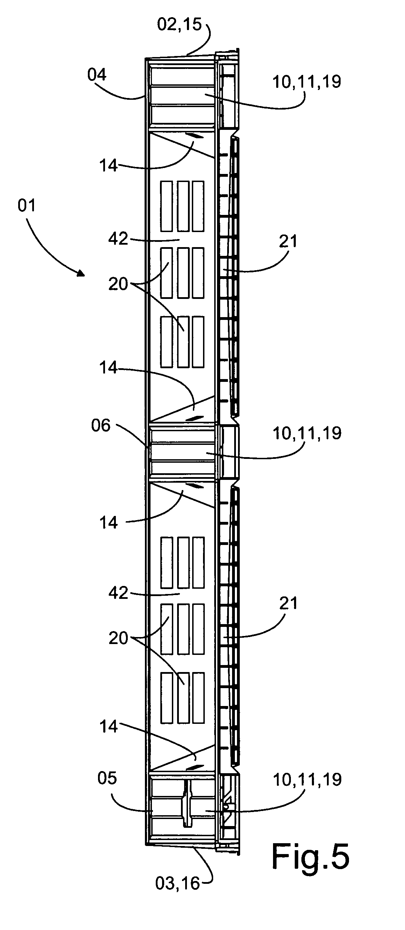

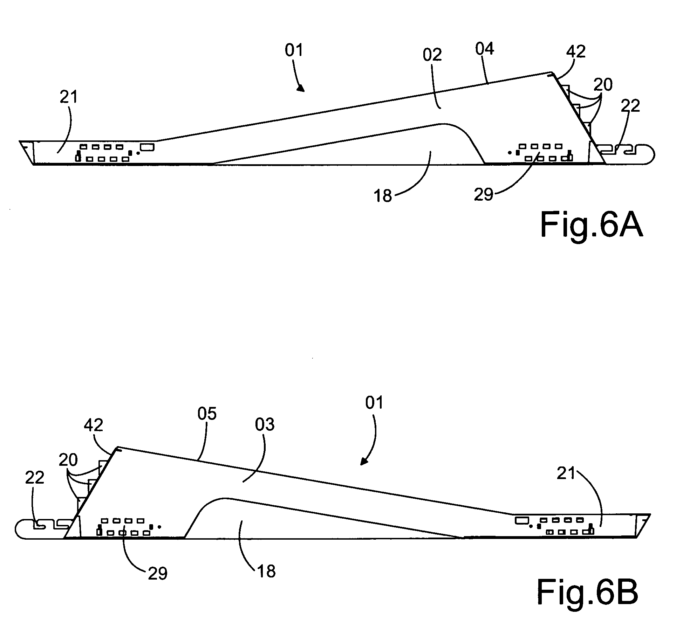

Die **FIGUREN 3****,** **4****,** **5** **und** **6A****,B** zeigen die Tragplatte **01** gemäß **FIGUR 1** in den entsprechenden Frontalansichten (**FIGUR 3** von oben, **FIGUR 4** von hinten, **FIGUR 5** von vorne, **FIGUR 6A** von rechts, **FIGUR 6B** von links). Die Erläuterungen der gezeigten Bezugszeichen sind entsprechend der **FIGUR 1** zu entnehmen. Zusätzlich zeigt die **FIGUR 4** eine weitere Öffnung **30** in der Kopffläche **17** des äußeren Trapezprofils **05** der Tragplatte **01.** Durch diese Öffnung **30** kann eine nicht weiter dargestellte Anschlussdose bedient werden, die über eine weitere Öffnung **31** mit dem Solarmodul verbindbar ist. In der **FIGUR 4** ist die Abschlusswandung **42** nicht durchgängig dargestellt. Zu erkennen sind hier Belüftungsöffnungen **20.** Diese sind so konzipiert, dass die ausströmende Luft nach oben abgeleitet wird (vergleiche **FIGUREN 6A****, B**).

Die **FIGUR 7** schließlich zeigt ein Tragplattenfeld **32** aus einer Vielzahl von einzelnen Tragplatten **01.** Zu erkennen ist ein auf die Standflächen **12** der Tragplatten **01** aufgebrachtes festes Beschwerungsgut **33** in Form von grobkörnigem Kies. Weiterhin ist eine Ausrichtung der geneigten Auflageflächen **11** der Tragplatten **01** gegen die Einfallsrichtung **34** von im Betrieb einfallendem Sonnenlicht dargestellt. Angedeutet (speziell im Detailausschnitt) sind auch Schiebeelemente **35** mit einem beidseitigen Schwalbenschwanzprofil, die in die Schwalbenschwanzprofile von Schienen **36** mit Schwalbenschwanzführung als weitere Verbindungselemente **43** zwischen benachbarten Tragplatten **01** eingeschoben sind. Aufgebracht durch Klebung auf die Auflageflächen **11** wurden rahmenlose Solarpaneele **37** als Solarmodule **41.** das gesamte Tragplattenfeld **32** ist eindringungsfrei auf einem Flachsubstrat **38** aufgelegt und durch das Beschwerungsgut **33** fixiert und damit einfach gegen Abheben durch angreifenden Windlasten gesichert.

### BEZUGSZEICHENLISTE

- **01**: Tragplatte
- **02**: linke Seitenkante von 01
- **03**: rechte Seitenkante von 01
- **04**: linkes äußeres Trapezprofil
- **05**: rechtes äußeres Trapezprofil
- **06**: mittleres Trapezprofil
- **07**: Vorderkante von 01
- **08**: Hinterkante von 01
- **09**: Rechteckfläche
- **10**: Oberseite von 04, 05, 06
- **11**: geneigte direkte Auflagefläche aus 10
- **12**: Zwischenraum zwischen 04, 05, 06
- **13**: direkte Standfläche aus 12
- **14**: Seitenfläche (schräg) von 04, 05, 06
- **15**: äußere Seitenfläche (senkrecht) von 04
- **16**: äußere Seitenfläche (senkrecht) von 05
- **17**: Kopffläche von 04, 05, 06
- **18**: Griffaussparung in 15, 16
- **19**: Längsprofilierung in 10
- **20**: Belüftungsöffnung
- **21**: Trittsteg
- **22**: Verbindungslasche
- **23**: Verbindungsbolzen
- **24**: Vorderkante von 21
- **25**: äußere Seitenwandung von 27
- **26**: äußere Seitenwandung von 28
- **27**: Verlängerung von 04
- **28**: Verlängerung von 05
- **29**: Öffnung
- **30**: Öffnung
- **31**: Öffnung
- **32**: Tragplattenfeld
- **33**: festes Beschwerungsgut
- **34**: Einfallsrichtung
- **35**: Schiebeelement
- **36**: Schiene
- **37**: rahmenloses Solarpaneel
- **38**: Flachsubstrat
- **39**: Aufnahmebereich
- **40**: Abflussgitter
- **41**: Solarmodul
- **42**: Abschlusswandung
- **43**: weiteres Verbindungselement

- **h**: Höhe von 04, 05, 06
- **h₁**: Höhe von 04, 05, 06 an 07
- **h₂**: Höhe von 04, 05, 06 an 08
- α: Neigungswinkel (h₁ → h₂)

## Patentansprüche

1. Tragplatte (01), die der Lagerung von Solarmodulen (41) auf einem Flachsubstrat (38) dient, mit zumindest drei gleichmäßig zueinander beabstandeten parallelen Trapezprofilen (04, 05, 06), die jeweils durchgängig entlang der beiden Seitenkanten (02, 03) und plattenmittig von der Vorderkante (07) der Tragplatte (01) zur Hinterkante (08) verlaufen, wobei alle vier Kanten (02, 03, 07, 08) eine Rechteckfläche (09) einschließen,
**GEKENNZEICHNET DURCH**
• eine Abmessung der Rechteckfläche (09) im Größenbereich der Rechteckfläche eines einzelnen zu lagernden rechteckigen flächigen Solarmoduls (41),
• eine Ausbildung der Oberseiten (10) der Trapezprofile (04, 05, 06) als direkte Auflagefläche (11) für das zu lagernde Solarmodul (38) auf der Tragplatte (01) und eine Ausbildung der Zwischenräume (12) zwischen den Trapezprofilen (04, 05, 06) als direkte Standfläche (13) für die Tragplatte (01) auf dem Flachsubstrat 838), wobei die Standfläche (13) zwei- bis dreimal so groß ist wie die Auflagefläche (11) und gleichzeitig als Aufnahmebereich (39) für ein festes Beschwerungsgut (33) dient, und
• eine kontinuierliche Zunahme der Höhe (h) der Trapezprofile (04, 05, 06) von der Vorderkante (07) zur Hinterkante (08) zur Bildung einer Neigung der Auflagefläche (11).

2. Tragplatte (01) nach Anspruch 1,
**GEKENNZEICHNET DURCH**
eine Bildung der Auflagefläche (11) aus Oberseiten (10) mit rechteckiger Form und der Standfläche (13) aus Zwischenräumen (12) mit trapezförmiger Form oder eine Bildung der Auflagefläche (11) aus Oberseiten (10) mit trapezförmiger Form und der Standfläche (13) aus Zwischenräumen (12) mit rechteckiger Form.

3. Tragplatte (01) nach Anspruch 1 oder 2,
**GEKENNZEICHNET DURCH**
eine stapelbare Ausbildung aus einem Kunststoff.

4. Tragplatte (01) nach zumindest einem der Ansprüche 1 bis 3,
**GEKENNZEICHNET DURCH**
eine Abschlusswandung (42) mit einer Höhe (h₂) der Trapezprofile (04, 05, 06) entlang der Hinterkante (08) der Tragplatte (01) zumindest im Bereich der Trapezprofile (04, 05, 06).

5. Tragplatte (01) nach Anspruch 4,
**GEKENNZEICHNET DURCH**
eine schräge Ausbildung der Abschlusswandung (42).

6. Tragplatte (01) nach zumindest einem der Ansprüche 1 bis 5,
**GEKENNZEICHNET DURCH**
ein Abflussgitter (40) entlang der Hinterkante (08) der Tragplatte (01) zumindest im Bereich der Standfläche (13) zwischen den Trapezprofilen (04, 05, 06).

7. Tragplatte (01) nach zumindest einem der Ansprüche 1 bis 6,
**GEKENNZEICHNET DURCH**
einen durchgängigen Trittsteg (21) entlang der Vorderseite (07) der Tragplatte (01).

8. Tragplatte (01) nach Anspruch 7,
**GEKENNZEICHNET DURCH**
eine gitterförmige Ausbildung des Trittstegs (21).

9. Tragplatte (01) nach zumindest einem der Ansprüche 1 bis 8,
**GEKENNZEICHNET DURCH**
Verbindungslaschen (22) an der Hinterkante (08) der Tragplatte (01) und Verbindungsbolzen (23) an der Vorderkante (07) der Tragplatte (01) oder des Trittstegs (21) zur spaltenweisen Verbindbarkeit von mehreren Tragplatten (01) hintereinander.

10. Tragplatte (01) nach Anspruch 9,
**GEKENNZEICHNET DURCH**
eine Anordnung von zwei Verbindungslaschen (22) jeweils in Verlängerung der äußeren Seitenfläche (15, 16) der beiden äußeren Trapezprofile (04, 05) und von zwei Verbindungsbolzen (23) jeweils an den äußeren Seitenflächen (15, 16) der beiden äußeren Trapezprofile (04, 05) oder des Trittstegs (21).

11. Tragplatte (01) nach zumindest einem der Ansprüche 1 bis 10,
**GEKENNZEICHNET DURCH**
weitere Verbindungselemente (43) im Bereich der äußeren Seitenflächen (15, 16) der beiden äußeren Trapezprofile (04, 05) zur reihenweisen Verbindbarkeit von mehreren Tragplatten (01) nebeneinander.

12. Tragplatte (01) nach Anspruch 11,
**GEKENNZEICHNET DURCH**
eine Ausbildung des weiteren Verbindungselements (43) in Form einer Schiene (36) mit einer Schwalbenschwanzführung.

13. Tragplattenfeld (32) mit zumindest zwei benachbart angeordneten Tragplatten (01) nach zumindest einem der Ansprüche 1 bis 12,
**GEKENNZEICHNET DURCH**
ein auf die Standflächen (13) der Tragplatten (01) aufgebrachtes festes Beschwerungsgut (33) in Form von grobkörnigem Kies.

14. Tragplattenfeld (32) mit zumindest zwei benachbart angeordneten Tragplatten (01) nach Anspruch 12 oder 13,
**GEKENNZEICHNET DURCH**
eine feste, aber lösbare reihenweise Verbindung der Tragplatten (01) mittels Schiebeelemente (35) mit einem beidseitigen Schwalbenschwanzprofil, die in die Schwalbenschwanzprofile der Schienen (36) mit Schwalbenschwanzführung zwischen benachbarten Tragplatten (01) eingeschoben sind.

15. Tragplattenfeld (32) mit zumindest zwei benachbart angeordneten Tragplatten (01) nach zumindest einem der Ansprüche 1 bis 12 oder nach einem der Ansprüche 13 oder 14,
**GEKENNZEICHNET DURCH**
eine eindringungsfreie Auflage der Tragplatten (01) auf das Flachsubstrat (38).
